# FASCICULE DE BREVET EUROPEEN

(11) **EP 2 310 879 B1**
(45) Date de publication et mention de la délivrance du brevet: **21.11.2012**
(21) Numéro de dépôt: 09793965.6
(22) Date de dépôt: 10.07.2009
(51) Int. Cl.: G01T 7/00

(54) **DISPOSITIF DE MESURE DE GRANDEURS PHYSIQUES DE MATIERES NUCLEAIRES ET PROCEDE DE MISE EN OEUVRE D'UN TEL DISPOSITIF**
VORRICHTUNG ZUR MESSUNG PHYSIKALISCHER MENGEN VON NUKLEARMATERIALIEN UND VERFAHREN ZUM EINSATZ EINER SOLCHEN VORRICHTUNG
DEVICE FOR MEASURING PHYSICAL QUANTITIES OF NUCLEAR MATERIALS AND METHOD OF EMPLOYING SUCH A DEVICE

(30) Priorité: 10.07.2008 FR 0854715
(43) Date de publication de la demande: 20.04.2011
(73) Titulaire: Commissariat à l'Énergie Atomique et aux Énergies Alternatives, 75015 Paris (FR)
(72) Inventeur: HUPONT, Nicolas, F-04860 Pierrevert (FR); BERNARD, Philippe, F-13980 Alleins (FR); MANTE, Jean-François, F-30200 Bagnols Sur Ceze (FR); COULON, Jean-Pierre, F-13650 Meyrargues (FR); SAUREL, Nicolas, F-21490 Varois et Chaignot (FR)
(74) Mandataire: Ilgart, Jean-Christophe
(86) Numéro de dépôt international: PCT/EP2009/058839
(87) Numéro de publication internationale: WO 2010/004033

(56) Documents cités:
- WO-A-00/08450
- FR-A1- 2 654 219
- FR-A1- 2 654 219
- JP-A- 2 031 199
- JP-A- 2000 171 564
- JP-A- 2002 014 194
- US-A1- 2006 104 400

## Description

### DOMAINE TECHNIQUE ET ART ANTÉRIEUR

La présente invention se rapporte principalement à un dispositif de mesure de grandeurs physiques de matière nucléaire, plus particulièrement un dispositif de détermination des propriétés chimiques ou physiques des matières nucléaires par le recours à des rayonnements électromagnétiques ou à des particules pour induire par activation une émission secondaire neutronique. La présente invention se rapporte également à un procédé de mise en oeuvre d'un tel dispositif.

Par exemple pour l'uranium (U), le plutonium (Pu) et l'américium (Am), les grandeurs physiques de type quantitative, peuvent être les masses, les émissions neutroniques spontanées et les émissions neutroniques induites et de type qualitative, la multiplicité des émissions neutroniques spontanées, la multiplicité des émissions neutroniques induites, la nature fissile des matières, et leur composition isotopique.

Quand les matières nucléaires sont irradiantes et/ou contaminantes, il est nécessaire respectivement d'utiliser des écrans et/ou d'en assurer le confinement pour garantir la protection du personnel.

Les installations nucléaires comprennent donc des cellules blindées dans lesquelles les matières nucléaires sont traitées ou stockées. Les cellules blindées sont constituées d'une ou plusieurs enceintes étanches appelées caisson. Le ou les caissons est (sont) entouré(s) d'un blindage radiologique également qualifié de biologique.

Les cellules blindées sont équipées de dispositifs permettant l'accostage de récipients blindés transportables afin d'introduire ou d'évacuer les matières nucléaires tout en assurant également la continuité de la protection du personnel contre l'irradiation et la contamination.

Il est nécessaire dans le cadre de leur traitement ou à l'occasion de leur évacuation de mesurer ces matières nucléaires. Le commanditaire de ces mesures peut être l'exploitant de l'installation nucléaire, mais également des autorités extérieures telles que l'AIEA dans le cadre de ses missions de contrôle.

Pour réaliser ces mesures, on est ordinairement contraint d'isoler ces matières nucléaires.

De manière connue, les mesures à réaliser sur les matières nucléaires sont effectuées à distance des cellules blindées. Pour cela, on extrait les matières nucléaires de la cellule, on les isole dans un récipient blindé accosté à la cellule blindée, puis on les transfère vers une installation dédiée pour réaliser les mesures.

Or, pour des raisons règlementaires et de sécurité, la matière nucléaire ne peut être évacuée de la cellule blindée que si elle répond à certaines spécifications dont la quantité de matière fissile. Or, dans les installations en place, il n'existe aucun moyen pour faire cette mesure in situ qui permette de garantir le respect de ces spécifications.

Dans un cadre de procédures dérogatoires, l'évacuation de la matière nucléaire peut être réalisée, mais ce au prix d'opérations nombreuses, complexes, longues, coûteuses et présentant des risques. En effet, lors du transport de la matière nucléaire, un accident pourrait provoquer une pollution de l'environnement extérieur.

Il est connu, du document FR 2 654 219, un dispositif permettant la mesure du débit de dose de la matière nucléaire dans un récipient, le dispositif étant accosté à la cellule blindée.

Ce dispositif comporte un château de transport, de type « Padirac », monté sur une table de transport. Ce château comporte un logement cylindrique contenant un récipient de transfert. Lorsque le château de transport est accosté sur la paroi extérieure de la cellule blindée, une porte prévue dans la paroi de la cellule blindée est ouverte, une trappe prévue sur le château de transport est également ouverte. Puis au moyen d'un ringard de connexion introduit par une ouverture pratiquée dans le fond du logement du château de transport, le récipient de transfert est introduit dans la cellule blindée, dans laquelle il est chargé en matière nucléaire. Le récipient de transfert est ensuite partiellement réintroduit dans le logement du château de transport. Pour la mesure, une sonde de mesure de débit de dose est introduite par l'orifice par lequel a été introduit le ringard, après retrait de celui-ci. L'introduction de cette sonde dans le logement empêche donc de pouvoir rentrer complètement le récipient de transfert à l'intérieur du château de transport, ainsi que de refermer la trappe du château de transport.

Ce dispositif fournit une mesure de débit de dose, or cette grandeur physique ne peut pas être liée de manière univoque à des grandeurs physiques de la matière présente dans le récipient transfert, sans hypothèses complémentaires sur sa nature physico-chimique. En outre, l'impossibilité de pouvoir refermer la trappe du château de transport et donc de pouvoir isoler de manière étanche la matière nucléaire à mesurer du reste de la cellule blindée, gêne la mesure. En effet, dans ce cas le débit de dose mesuré ne peut être attribué exclusivement à celui de la matière contenue dans le récipient de transfert. Il est mentionné dans ce document que ,pour éviter que les mesures effectuées à l'intérieur du château de transport ne soient entachées d'erreurs résultant du bruit de fond en provenance de la cellule blindée, on peut effectuer, précédemment à la mesure du débit de dose, une mesure des bruits de fond effectuée également à l'aide de la sonde introduite par l'orifice par lequel est introduit le ringard de connexion.

Ce dispositif de mesure nécessite donc une étape supplémentaire de mesures qui allonge le temps requis pour obtenir une mesure sûre des matières nucléaires. En outre, cela impose de faire des hypothèses, ce qui réduit donc la précision et la justesse des mesures.

En outre, le fait de ne pas pouvoir refermer la cellule blindée, impose pendant un certain temps d'avoir un isolement réduit de la matière nucléaire qu'elle contient vis-à-vis de l'environnement extérieur.

Par ailleurs, l'utilisation de l'orifice du ringard de connexion pour le passage de la sonde impose à celle-ci d'être de conception complexe. En effet, elle comporte un grand nombre de pièces, ces pièces étant liées mécaniquement les unes avec les autres, ce qui augmente d'autant plus les risques de défaillance.

C'est par conséquent un but de la présente invention d'offrir un dispositif de mesures offrant une grande facilité de transport et de mise en oeuvre et une grande sécurité d'utilisation, permettant d'effectuer des mesures de matières nucléaires contenues dans plusieurs cellules blindées.

C'est également un but de la présente invention d'offrir un dispositif de mesures de grandeurs physiques de matières nucléaires contenues dans une cellule blindée offrant une grande précision au niveau des mesures effectuées.

### EXPOSÉ DE L'INVENTION

Les buts précédemment énoncés sont atteints par un dispositif de mesure comportant un château de transport dans lequel est confinée la matière nucléaire à mesurer, le château étant accosté sur la cellule dans laquelle est prélevée la matière nucléaire à mesurer, ce dispositif comportant une enveloppe recouvrant le château de transport, l'enveloppe étant équipée de capteurs de détection de neutrons. Le dispositif est apte à être accosté sur et désaccosté de la cellule blindée pour pouvoir effectuer des mesures de matières nucléaires contenues dans différentes cellules blindées.

Le terme accosté (respectivement désaccosté) signifie que le dispositif est temporairement assemblé et accouplé (respectivement désassemblé et désaccouplé) à la cellule blindée, de manière étanche, de façon à introduire ou à évacuer des matières nucléaires dans ladite cellule, tout en assurant la continuité de la protection du personnel contre l'irradiation et la contamination.

En outre le dispositif selon la présente invention est très facilement démontable, ce qui permet son transport en différents endroits pour effectuer des mesures de matières nucléaires contenues dans différentes cellules.

Il est possible de mesurer des grandeurs physiques de la matière nucléaire disposée à l'intérieur du château de transport, le logement du château de transport étant isolé de la cellule blindée pendant la mesure.

Par ailleurs, ce dispositif ne nécessite pas le transport de la matière nucléaire, il permet une mesure des grandeurs physiques de cette matière avant son transport, ce qui permet de se conformer aux exigences de réglementation.

Avantageusement, le dispositif comporte un module d'émission neutronique logé dans un support en graphite sur lequel est disposé le château.

La présente invention a alors principalement pour objet un dispositif de mesure de grandeurs physiques de matière nucléaire contenue dans une cellule blindée (2), apte à être accosté sur et à être désaccosté de ladite cellule blindée (2), ledit dispositif étant destiné à effectuer la mesure dans une position accostée sur la cellule blindée, comportant un chariot, un support disposé sur le chariot, un récipient blindé contenant un récipient de transfert destiné à stocker la matière nucléaire à mesurer, ledit récipient blindé étant disposé sur le support, le récipient blindé comportant une ouverture destinée à être alignée avec une ouverture présente dans une paroi de la cellule blindée donnant accès à la matière nucléaire qu'elle contient, dans lequel ledit dispositif de mesure comporte également une enveloppe recouvrant le récipient blindé et des moyens de mesure fixés sur ladite enveloppe.

Le chariot, le support et le récipient blindé sont avantageusement aptes à être séparés pour permettre un démontage et un montage aisés dudit dispositif en vue de son transport vers une autre cellule blindée et son utilisation avec ladite autre cellule blindée.

De manière avantageuse, le support comporte un logement recevant un module d'émission neutronique ou de rayonnement électromagnétiques.

L'enveloppe et le support forment avantageusement un caisson entourant sur cinq côtés le récipient blindé, le sixième côté ouvert permettant la communication avec la cellule blindée, ce caisson réfléchissant les neutrons et les confinant.

L"enveloppe comporte, par exemple deux parois latérales, un fond destiné à être disposé à l'opposé de la cellule blindée par rapport au récipient blindé et un toit, ledit fond comportant une ouverture pour permettre la connexion du récipient blindé à un ringard.

Par exemple, on prévoit de fixer deux moyens de mesure sur chaque paroi latérale à l'extérieur de l'enveloppe et deux moyens de mesure sur le toit à l'extérieur de l'enveloppe. La mise en oeuvre de deux « moyens de mesure » permet d'obtenir une efficacité de mesure supérieure à la mise en oeuvre d'un seul moyen de mesure. En outre la disposition de ces moyens juste à l'extérieur de l'enveloppe correspond à l'emplacement où le flux neutronique à mesurer est le plus fort.

Les moyens de mesure présentent chacun un axe, les deux moyens de mesure par paroi de l'enceinte sont alors avantageusement disposés de sorte à avoir leurs axes parallèles, et les moyens de mesure de deux parois différentes sont avantageusement orthogonaux. Cette disposition présente l'avantage de permettre d'acquérir des signaux dont on pourra extraire une information sur la localisation de la matière dans le récipient de transfert, et ainsi rendre leur mesure plus précise.

Les paires de moyens de mesure sont avantageusement centrées sur la cible du module d'émission, pour améliorer les mesures.

Par exemple, les moyens de mesure comportent plusieurs détecteurs, par exemple 4 ou 7.

L'enveloppe et/ou le support sont avantageusement en graphite, le graphite ayant la propriété de thermaliser le flux de neutrons et de réfléchir ce flux. On peut prévoir de recouvrir le graphite d'une tôle d'aluminium anodisé pour améliorer la résistance mécanique et en faciliter la décontamination si nécessaire.

Par exemple, le graphite est du graphite purifié du type UCAR, portant la référence CS 49 H.

De manière avantageuse, le dispositif de mesure selon l'invention comporte une protection radiologique recouvrant l'ensemble formé par le chariot, le récipient blindé et l'enveloppe en graphite de sorte à isoler ledit ensemble de l'environnement extérieur. Cette protection permet alors aux opérateurs d'être à proximité du dispositif de mesure.

La protection radiologique comporte par exemple deux parois latérales, un fond et un toit, une première ouverture étant pratiquée dans le fond de la protection pour le passage des câbles d'alimentation et de contrôle du module d'émission et des moyens de mesure, ladite première ouverture est obturée par un bouchon, et une deuxième ouverture pour la connexion du ringard, ladite deuxième ouverture étant obturée par un bouchon.

Avantageusement, des moyens de guidage de la protection radiologique par rapport à l'ensemble lors de la mise en place de la protection autour de l'ensemble sont prévus pour éviter de détériorer l'ensemble.

La présente invention a également pour objet un procédé d'assemblage du dispositif de mesure selon la présente invention, comportant les étapes :
- mise en place du chariot,
- mise en place du support sur le chariot,
- mise en place du récipient blindé sur le support,
- mise en place de l'enveloppe,
- mise en place des moyens de mesure sur l'enveloppe.

Le procédé d'assemblage selon l'invention, comporte avantageusement, l'étape de mise en place du module d'émission dans le support.

Ce procédé d'assemblage peut également comporter l'étape ultérieure de mise en place de la protection biologique.

La présente invention a également pour objet un procédé de mesure avec le dispositif de mesure selon l'invention, comportant les étapes :
- ouverture du récipient blindé,
- ouverture de la porte d'accès à l'intérieur de la cellule blindée,
- accostage du récipient de transfert au caisson,
- retrait du bouchon du récipient de transfert,
- mise en place de la matière nucléaire dans le récipient transfert,
- remise en place du bouchon sur le récipient de transfert,
- remise en place du récipient de transfert dans le récipient blindé,
- fermeture de la porte d'accès à l'intérieur de la cellule blindée,
- fermeture du récipient blindé,
- mesure des grandeurs physiques de la matière nucléaire.

Avantageusement, ce procédé comporte des cycles « émission-mesure » répétés à une fréquence de l'ordre de quelques dizaines de Hz, l'émission étant du type neutronique ou électromagnétique.

### BRÈVE DESCRIPTION DES DESSINS

La présente invention sera mieux comprise à l'aide de la description qui va suivre et des dessins en annexe, sur lesquels :
- la figure 1 est une vue en coupe longitudinale d'un dispositif de mesure selon la présente invention,
- la figure 2 est une vue en coupe longitudinale d'un château de transport selon la présente invention,
- les figures 3A et 3B sont des vues de face et de côté d'une clavette d'ouverture du château de transport,
- la figure 4 est une vue en perspective d'un exemple d'un module d'émission neutronique utilisable dans le dispositif de mesure,
- les figures 5A à 5G sont des représentations schématiques de différentes étapes de mise en place du dispositif de mesure selon la présente invention sur une cellule blindée,
- la figure 6 est une vue en coupe longitudinale du château de transport avec le récipient de transfert dans différentes positions,
- la figure 7 est une vue en perspective schématique d'une enveloppe selon la présente invention représentée de manière isolée.

### EXPOSÉ DÉTAILLÉ DE MODES DE RÉALISATION PARTICULIERS

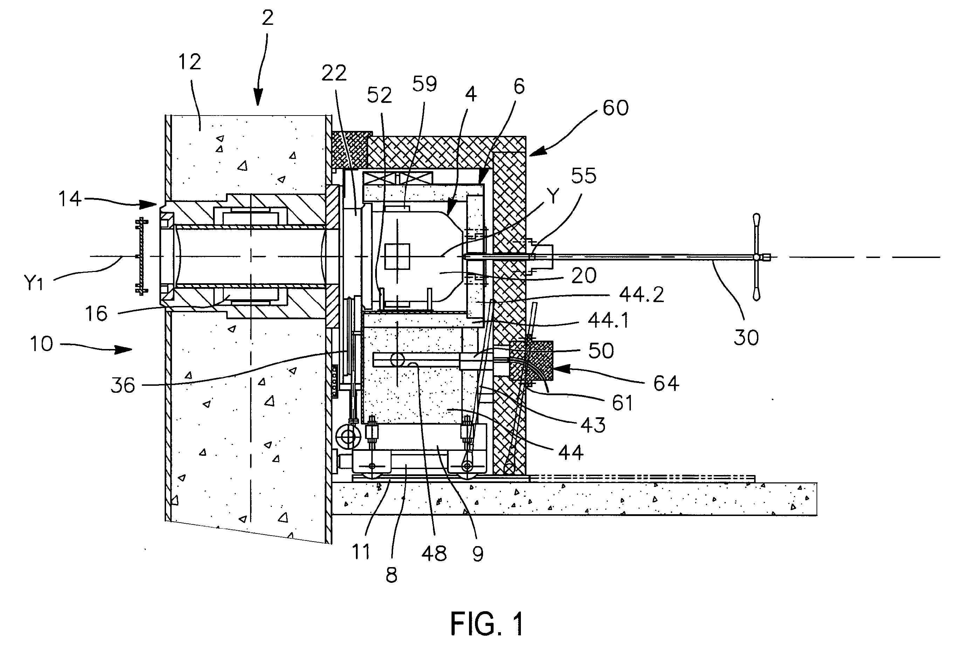

Sur la figure 1, on peut voir le dispositif de mesure selon la présente invention accosté sur une cellule blindée 2, dont on souhaite mesurer la matière nucléaire.

Le dispositif de mesure selon la présente invention est destiné à effectuer des mesures du taux d'irradiation de tout type d'objet, il peut s'agir de matière nucléaire, mais il peut également s'agir de tout type d'objet tel qu'un équipement hors service qui serait contenu dans une cellule blindée et qu'il serait nécessaire d'évacuer. Avant son évacuation, le taux d'irradiation de cet équipement hors service doit être mesuré de manière à vérifier qu'il est inférieur au seuil légal pour le transport d'objets irradiés. Si le taux d'irradiation est conforme, l'équipement peut être transporté, par exemple dans le château de transport ayant servi à la mesure comme cela sera décrit ci-dessous.

Le dispositif de mesure comporte un récipient blindé 4, destiné à contenir la matière nucléaire à mesurer et à l'intérieur duquel les mesures seront effectuées, une structure de mesure 6 entourant le récipient blindé 4 et comportant les moyens de mesure, qui seront décrits plus tard, et un chariot mobile 8 permettant l'accostage du dispositif sur la cellule blindée 2.

La cellule blindée 2 comporte une cavité 10, dans laquelle est stockée la matière nucléaire (non représentée), entourée par une paroi 12 formant le blindage. La paroi 12 est constituée généralement d'un coeur en béton recouvert sur ses deux faces d'une tôle en plomb. En outre, la cellule comporte un accès 14 à la cavité 10. Cet accès est formé par un passage de forme cylindrique à section circulaire d'axe Y1, et comporte des moyens d'obturation étanche formés, dans l'exemple représenté, par une porte 16, de type porte à barillet, mobile en rotation autour d'un axe X vertical.

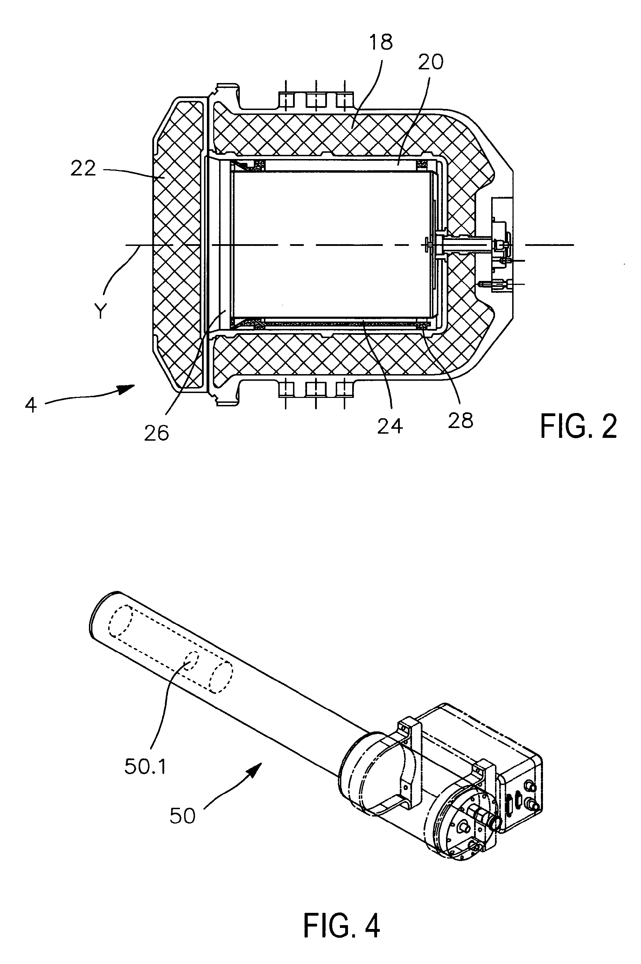

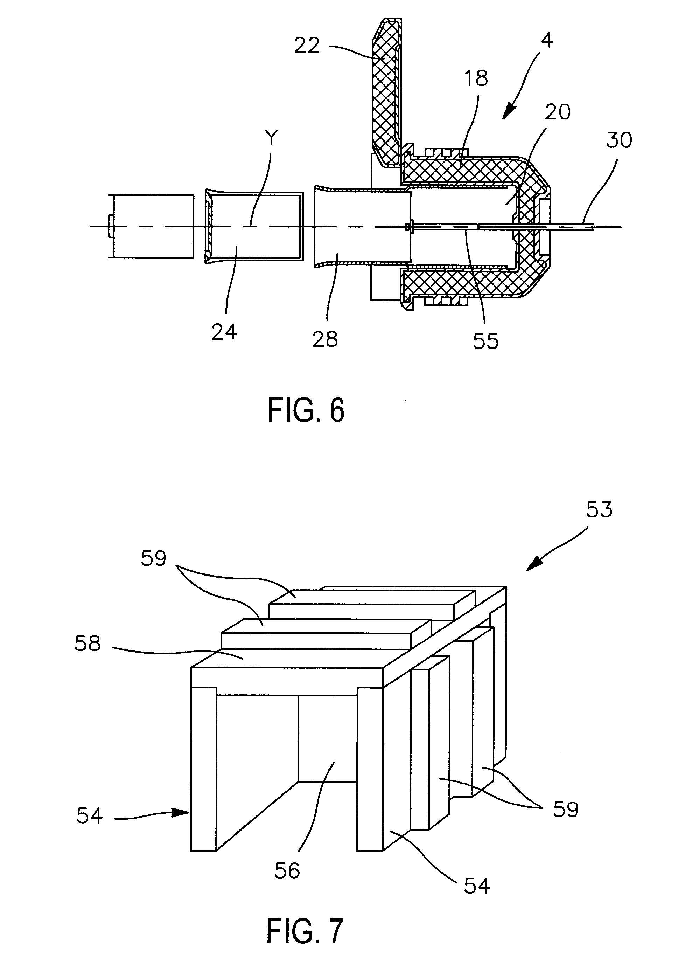

Le récipient blindé, représenté sur les figures 2 et 6, est du type connu et est par exemple décrit dans la demande de brevet FR 1 515 024. Le récipient blindé est par exemple du type château « Padirac » largement utilisé dans le domaine nucléaire.

Le récipient blindé, appelé également château de transport, est formé par un corps 18 délimitant un chambre 20 de forme cylindrique d'axe Y et d'un dispositif amovible d'obturation 22.

Le corps 18 est par exemple réalisé en plomb recouvert intérieurement et extérieurement d'une enveloppe en acier.

Le dispositif d'obturation est par exemple formé par une porte apte à coulisser le long d'une direction orthogonale à l'axe Y de la chambre 20.

En outre, un récipient de transfert 24 est disposé dans la chambre 20, le récipient de transfert 24 étant obturable par un bouchon 26. Le récipient de transfert 24 est de forme cylindrique et est reçu dans un réceptacle tubulaire 28, lui-même logé dans la chambre 20. Le réceptacle tubulaire 28 est apte à être déplacé le long de l'axe Y, pour permettre de sortir le récipient de transfert. Le réceptacle 28 forme un mécanisme de transfert étanche du récipient de transfert 24 de l'intérieur du château vers l'extérieur du château, le déplacement de ce mécanisme étant commandé au moyen d'un ringard de connexion 30 disposé à l'extérieur du château. Ainsi, le mécanisme de transfert forme une protection supplémentaire vis-à-vis de la matière nucléaire.

Le ringard de connexion 30 est de structure connue de l'homme du métier et ne sera pas décrit en détail.

Le ringard de connexion 30 comporte une extrémité destinée à venir s'accrocher sur le fond du réceptacle 28 pour provoquer son déplacement axial le long de l'axe Y par déplacement du ringard le long de l'axe Y. Sur la figure 1, le ringard de connexion 30 est en place. La connexion au fond du réceptacle 28 s'effectue, par exemple par une rotation du ringard de connexion 30 autour de son axe.

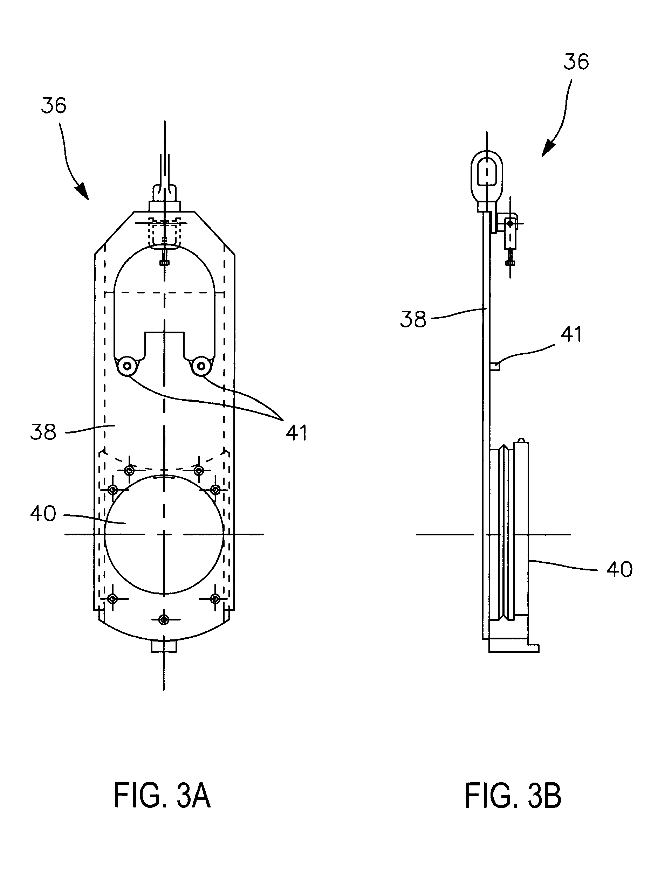

La porte coulissante 22 est montée dans des rails réalisés dans le corps 18. Le coulissement de la porte 22 est obtenue au moyen d'une clavette d'ouverture 36 visible sur les figures 3A et 3B, sa structure est également connue de l'homme du métier et ne sera pas décrite en détail.

La clavette d'ouverture 36, représentée de manière isolée sur les figures 3A et 3B, comporte une platine 38 munie d'une lumière 40 de dimensions telles que la lumière 40 permet le passage du récipient de transfert 24. La clavette d'ouverture 36 comporte également des moyens 41 pour maintenir la porte, ceux-ci étant décalés axialement par rapport à la lumière 40. La clavette d'ouverture 36 est montée sur le chariot, le château est mis en place de sorte à disposer sa porte sur les moyens 41. Lors d'un coulissement de la clavette d'ouverture 36 orthogonalement à l'axe Y, la porte 22 coulisse et la lumière 40 est mise en regard de l'extrémité libre de la chambre 20. La clavette 36 assure également la continuité de la protection contre l'irradiation lors de l'ouverture du récipient blindé. Un anneau est prévu pour la manutention de la clavette d'ouverture 36.

L'extrémité libre de la chambre 20, est destinée à être alignée avec l'accès 14 de la cellule blindée. Pour cela, l'axe Y de la chambre est aligné avec l'axe Y1 de l'accès 14, de sorte à former un conduit continu.

Le chariot 8 supportant le château comporte une tablette horizontale 9, formant un support mobile pour le dispositif et permettant d'accoster le dispositif à la cellule blindée 2. De manière avantageuse, des rails 11 sont prévus pour guider le chariot et obtenir un alignement précis entre le château et l'accès 14 de la cellule blindée, plus particulièrement entre l'axe Y de la chambre et l'axe Y1 de l'accès 14.

De manière avantageuse, la tablette 9 est réglable en hauteur afin de faciliter un alignement entre le château 4 et l'accès 14.

Des moyens 42 pour déplacer verticalement la clavette d'ouverture 36 sont prévus sur le chariot 8. Ceux-ci sont avantageusement motorisés.

Des moyens de guidage vertical de la clavette d'ouverture 36 sont également prévus sur le chariot, ces moyens de guidage sont par exemple deux glissières en vé verticales.

Les moyens de déplacement de la clavette d'ouverture 36 comportent, par exemple deux vis verticales reliées par une traverse entraînant la clavette verticalement. Ces vis sont actionnées par un moteur électrique par l'intermédiaire de renvois d'angles.

Le coffret électrique alimentant le moteur peut être implanté sur le chariot et la commande est, par exemple du type boîte à boutons accessible à l'extérieur de la protection biologique. Le coffret est alimenté par un câble depuis un boîtier implanté sur le mur adjacent.

En outre, des butées de fin de course sont prévues pour limiter les mouvements de la clavette d'ouverture 36. L'arrêt en position basse se fait sur une butée mécanique prévue sur le chariot. Avantageusement, la fin de la course de la clavette a lieu légèrement plus bas pour éviter de laisser les vis des moyens de déplacement 42 en charge quasi permanente.

En cas de panne, il est avantageusement prévu de pouvoir manoeuvrer les moyens de déplacement manuellement, par exemple en laissant accessible une extrémité libre de l'arbre moteur, sur laquelle une manivelle peut être fixée.

Le déplacement du chariot 8 peut être manuel ou motorisé.

Dans le cas d'un déplacement manuel, on prévoit avantageusement des moyens d'assistance au déplacement pour faciliter les manoeuvres du chariot. Ces moyens d'assistance sont, par exemple formés par une clé à cliquet 43 coopérant avec des formes hexagonales portées par les roues du chariot disposées du côté le plus éloigné de la cellule. La clé à cliquet est manipulée par le personnel d'exploitation. Des moyens peuvent également être prévus pour limiter l'adhérence des roues, l'adhérence étant provoquée notamment par le poids du château.

La clé à cliquet 43 est représentée en tirets sur la figure 1, il est bien entendu qu'elle est utilisée avant la mise en place de la protection 60.

Dans l'exemple représenté, le dispositif comporte également un support 44 pour le château, formé par exemple par un parallélépipède en graphite qui participe à la mesure, comme nous le verrons par la suite.

Le support 44 est par exemple fixé sur le chariot 8 au moyen de deux vis.

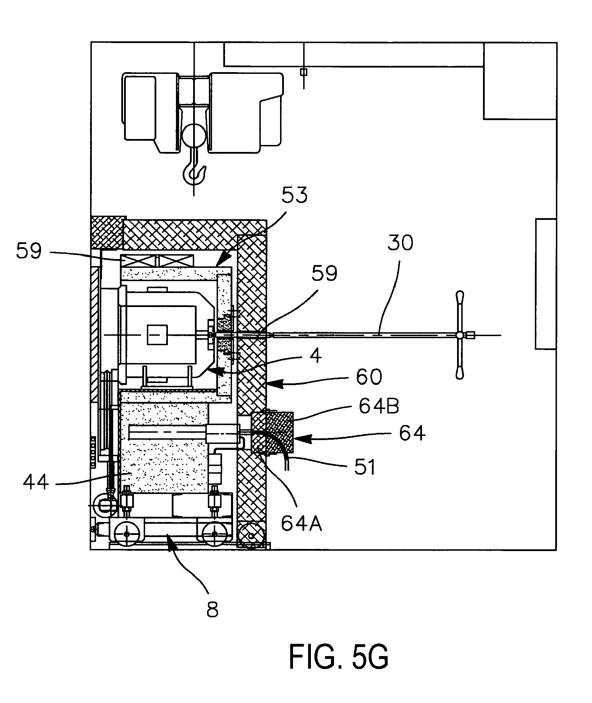

Selon la présente invention, le support en graphite 44 comporte un logement 48 pour recevoir un module d'émission neutronique 50 (non représenté sur la figure 1, représenté seul sur la figure 4 et représenté dans le dispositif de mesure sur la figure 5G). Le logement 48 est de forme cylindrique à section circulaire, orienté de sorte que son axe soit parallèle à l'axe de l'accès 14. Le logement 48 est non traversant et son ouverture débouche dans la face du support opposée à celle faisant face à la cellule blindée. Dans le module d'émission neutronique, la zone « neutrogène » 50.1 est quasi ponctuelle et est désignée par le terme « cible ». De plus, les neutrons sont émis « dans toutes les directions ». Le logement 48 est orienté de sorte que la cible 50.1 soit centrée sur le récipient 24 et sur les blocs de détection.

L'utilisation du graphite comme matériau pour le support du module d'émission neutronique 50 permet de thermaliser le flux neutronique, c'est-à-dire de changer le spectre énergétique des neutrons émis par le module, qui sont par exemple émis à 14 MeV, afin de les faire passer dans le domaine thermique.

En outre, le graphite a comme propriété de réfléchir le flux neutronique vers le récipient de transfert.

Par exemple, le graphite est du graphite purifié du type UCAR, portant la référence CS 49 H.

On peut prévoir de protéger les faces accessibles du support en graphite par une enveloppe en aluminium anodisé, de même que la cavité recevant le module d'émission neutronique.

Par exemple, la face supérieure est équipée d'une tôle en aluminium anodisé de 10 mm d'épaisseur pour assurer une répartition du poids du château. En effet, c'est cette face qui va supporter le château, notamment par un vé de positionnement.

Le module d'émission neutronique 50 comporte des connexions électriques formées par un câble 51 haute tension sortant directement à travers une ouverture prévue dans une protection biologique, qui sera décrite ultérieurement. Ce câble rejoint une armoire d'alimentation électrique (non représentée) prévue à l'extérieur du dispositif de mesure.

Le module d'émission neutronique 50 peut comporter également des câbles courts raccordés à un boîtier fixé sur la face du support en graphite à l'opposé de la cellule, et démontable rapidement, facilitant le démontage du dispositif selon la présente invention.

Pour effectuer les mesures, on peut aussi recourir à un module d'émission de rayonnements électromagnétiques. Dans la suite de la description, le module 50 sera désigné « module d'émission ».

Les câbles de sortie de ce boîtier cheminent, par exemple à l'intérieur de la protection biologique jusqu'à l'ouverture de sortie des câbles.

Un élément en vé 52 pour maintenir le château est prévu sur le support 44, l'axe du vé étant orienté de sorte à être contenu dans un plan vertical contenant l'axe Y1 de l'accès 14.

Selon la présente invention, le dispositif de mesure comporte également une enveloppe de mesure 53 entourant le château, sur laquelle les blocs de détection des neutrons sont fixés.

Dans l'exemple représenté, l'enveloppe 53 comporte deux parois latérales (visibles sur la figure 7), un fond 56 orthogonal à l'axe Y et un toit 58, réalisés en graphite. Les parois 54, 56, 58 sont assemblées mécaniquement, par exemple par des vis. L'enveloppe comporte avantageusement des chicanes pour minimiser les fuites radiologiques, prévues au niveau du raccord entre deux parois.

Dans un exemple particulier, le dispositif de mesure comporte six blocs de détection de neutrons 59 fixé sur l'extérieur des parois latérales et sur le toit.

Les faces extérieures des parois latérales 54 et du toit 58 sont dotées de systèmes de fixation pour les blocs de détecteurs. De manière avantageuse, deux blocs de détection sont fixés sur chaque face. Les « moyens de mesure » comportent chacun un axe. Sur une même paroi, les axes des moyens de mesure, sont parallèles. Les moyens de détection disposés sur des parois différentes sont avantageusement disposés de sorte à avoir leurs axes orthogonaux ».

Cette disposition permet d'acquérir des signaux dont on pourra extraire une information sur la localisation de la matière dans le récipient de transfert 24, et ainsi rendre leur mesure plus précise.

Les paires de blocs de détecteurs 59 sont avantageusement centrés sur la cible 50.1 du module d'émission neutronique, comme cela a été expliqué précédemment.

En partie supérieure de l'enveloppe 53, un anneau peut être prévu pour la manutention verticale de l'enveloppe sans démontage. La position du point de préhension est déterminée avec soin pour éviter toute rotation lors de la manutention.

Dans le fond 56 de l'enveloppe 53, une ouverture 57 permet la connexion d'une rallonge de ringard 55 sur le château.

Le graphite de l'enveloppe peut être identique à celui du support.

Le support 44 peut être réalisé, par exemple polyéthylène, plomb, bore, etc. pour la mise en oeuvre d'autres méthodes de mesures ciblées sur d'autres grandeurs physiques.

A titre d'exemple, l'enveloppe 53 peut présenter une épaisseur de 100 mm, chaque face de l'enveloppe étant revêtue d'aluminium anodisé.

De manière particulièrement avantageuse, le support 44 coopère avec l'enveloppe 53, de manière à former un caisson de forme parallélépipédique, fermé sur cinq côtés, le sixième coté étant ouvert et étant accosté à la paroi de l'enceinte blindée. Ainsi, le récipient de transfert destiné à contenir la matière à mesurer est complètement entouré par du graphite. Comme cela a déjà été mentionné, le graphite a pour propriété de réfléchir le flux neutronique, ce flux est donc renvoyé vers le récipient de transfert, i.e. vers la matière, ce qui permet d'améliorer les mesures. En outre, ce caisson améliore le confinement des neutrons.

Dans l'exemple représenté, le support 44 comporte, au niveau de sa partie supérieure, une tablette 44.1, dépassant vers l'arrière par rapport à la partie du support recevant le module d'émission neutronique 50, ce qui permet de limiter l'encombrement du dispositif.

Avantageusement, la tablette 44.1 comporte une rainure 44.2 logeant une extrémité inférieure du fond 56 de l'enveloppe 53 qui dépasse par rapport aux parois latérales, ce qui augmente le confinement des neutrons.

Concernant les corps des blocs de détection, ceux-ci sont par exemple réalisés en polyéthylène recouverts d'une feuille de cadmium.

Ces blocs détecteurs sont, par exemple équipés de quatre ou sept détecteurs tout en offrant un encombrement extérieur identique.

A titre d'exemple, les blocs de détection ont les dimensions extérieures : 780 mm de long, 200 mm de large et 70 mm d'épaisseur, pour une masse de 10 kg.

Chaque bloc détecteur possède un câble de liaison à l'armoire, ce câble passe par une encoche 60.1 prévue dans la protection 60.

Le cheminement des câbles évite leur détérioration lors du déplacement de la protection biologique.

Le module d'émission neutronique est particulièrement avantageux car il permet d'améliorer les mesures, mais un dispositif de mesure comportant des blocs de détection sans un tel module ne sort pas du cadre de la présente invention.

Dans un mode de réalisation, on prévoit en plus de recouvrir l'ensemble par une protection radiologique 60, dite également protection biologique. Cette protection est par exemple en polyéthylène boré à 10 %.

La protection 60 recouvre entièrement, l'enveloppe recouvrant le château disposé, lui-même sur le support 44 fixé sur le chariot 8. La protection 60 est, en outre, en appui contre la paroi de l'enceinte blindée autour de l'accès 14, lorsque le dispositif est en position de mesure.

La protection 60 comporte deux parois latérales 60.2, un toit 60.4 et un fond 60.6, assemblés mécaniquement de manière à former un ensemble d'un seul tenant. Avantageusement, les différentes parties sont pourvues de chicanes pour limiter les fuites radiologiques, ces chicanes sont prévues au niveau du raccord entre deux parois de l'enceinte.

La protection 60 est avantageusement montée sur des roulettes coopérant avec des rails (non représentés) pour permettre un accostage précis et aisé.

Ces rails permettent d'éviter la détérioration des équipements comme les blocs détecteurs ou la rallonge du ringard, lors de la mise en place de la protection.

La protection 60 peut être déplacée comme l'enveloppe 53, au moyen d'une clé à cliquet 61 coopérant avec des formes adaptées au niveau des roues.

Un dispositif de détection de fin de course peut être prévu entre la protection 60 et la cellule blindée 2, afin de prévenir de la mise en place de la protection 60. Ce détecteur est avantageusement connecté au système de contrôle du module d'émission neutronique 50, pour provoquer l'arrêt d'urgence du module 50 en cas de détection d'un changement de position de la protection 60.

On prévoit également des moyens de solidarisation de la protection 60 sur la paroi de la cellule blindée 2 pour éviter tout déplacement intempestif, par exemple des broches.

Comme déjà décrit précédemment, on prévoit également dans le fond 60.6 de la protection 60, une trappe 63 en partie basse permettant le raccordement du câble 51 haut tension du module d'émission neutronique 50.

On prévoit d'obturer l'ouverture 63 avec un élément de protection supplémentaire 64 permettant le passage du câble du module d'émission. L'élément 64 est un bouchon, dans l'exemple représenté, celui-ci est en deux parties ce qui permet de simplifier la fabrication.

Le bouchon 64 est composé d'une première partie 64A comportant un alésage d'axe sensiblement parallèle au sol pour permettre le passage du câble haute tension 51 et se positionnant sans aucun moyen de fixation dans l'ouverture 63 et une deuxième partie 64B comportant un alésage en forme de quart de cercle, l'extrémité haute de l'alésage venant dans le prolongement de l'alésage du 64A et l'extrémité inférieure de l'alésage étant sensiblement perpendiculaire au sol, ledit alésage permettant le passage du câble haute tension 51. Le demi-bouchon 64B est fixé à la protection 60 au moyen de vis.

Le toit 60.4 de la protection 60 est muni du côté de la cellule blindée 2 d'une encoche 68 pour le passage de la clavette complémentaire,

Un dégagement sur le coté permet également le passage de l'arbre de la commande manuelle de la clavette d'ouverture.

La protection 60 permet à des opérateurs de rester à proximité du dispositif de mesure en les isolant des radiations provoquées par le module d'émission neutronique et par celles émises par la matière nucléaire contenue dans le château 4.

Le fond de la protection 60 comporte également une ouverture 62 pour le passage du ringard, alignée avec celles dans le fond de l'enveloppe 53 et du château 2.

A titre d'exemple, l'épaisseur des parois de la protection 60 est de l'ordre de 200 mm.

Il est également prévu une armoire (non représentée) pour les équipements électroniques contenant :
- le module de commande du module d'émission neutronique,
- les amplificateurs des détecteurs de neutrons,
- un ordinateur de pilotage de la mesure.

On peut prévoir également un dispositif de contrôle de la mise en place de la protection radiologique 60, celui-ci comportant plusieurs détecteurs d'ouverture des accès au dispositif de mesure.

On prévoit également avantageusement des moyens pour avertir de manière univoque du fonctionnement du module d'émission neutronique 50, par exemple ceux-ci sont formés par un gyrophare d'avertissement.

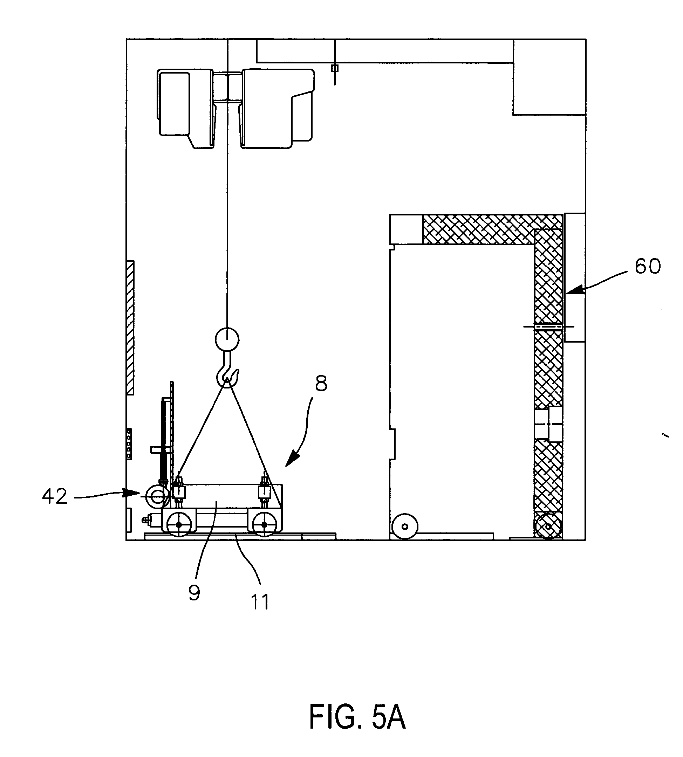

Nous allons maintenant décrire l'assemblage et la mise en place du dispositif de mesure selon la présente invention à proximité d'une cellule blindée, dans l'objectif d'effectuer des mesures sur de la matière nucléaire qu'elle contient, ceci en relation avec les figures 5A à 5G.

Tout d'abord, les rails 11 sont mis en place selon une direction orthogonale à la paroi de la cellule blindée 2, afin d'assurer l'alignement du château 4 avec l'accès 14.

Le chariot 8 est ensuite mis en place sur les rails à l'aide d'un moyen de levage et de déplacement d'une grue (figure 5A), du type pont de levage.

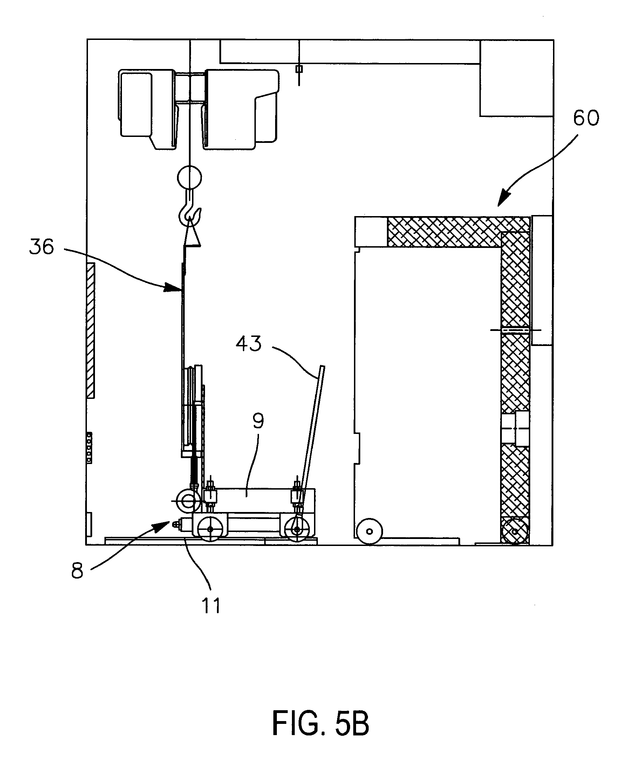

La clavette d'ouverture 36 est ensuite montée sur le chariot 8 au niveau des moyens de déplacement, toujours au moyen d'une grue (figure 5B).

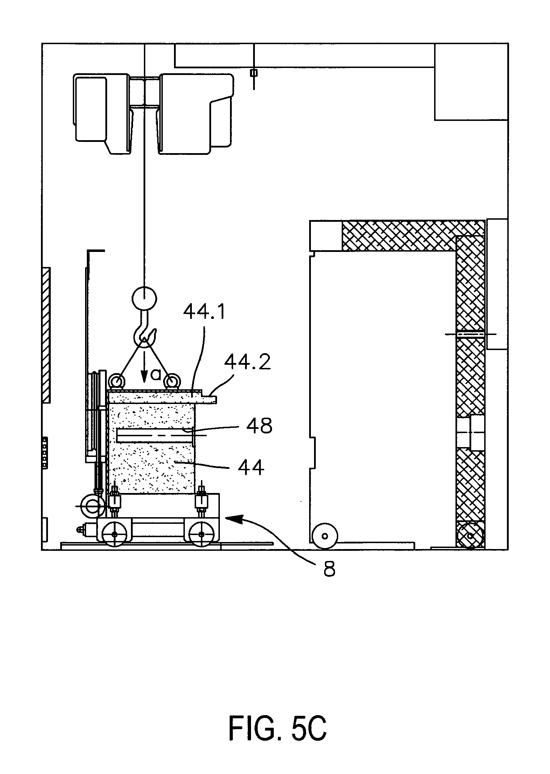

Le support en graphite est ensuite déposé sur le chariot 8, le chariot 8 peut être rapproché de la cellule avant cette étape (figure 5C).

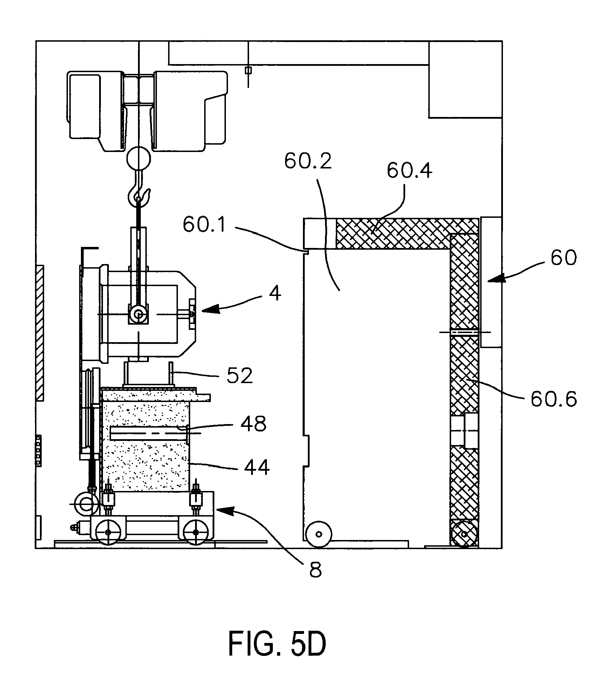

Dans une étape suivante, le support en forme de vé est placé sur le support 44 en graphite, puis le château de transport 4 est déposé sur le support en vé (figure 5D).

L'anneau de préhension de la clavette est déposé et une pièce de protection biologique de même nature et épaisseur que la protection biologique 60 est mise en place pour obturer l'encoche de la face supérieure de la protection biologique.

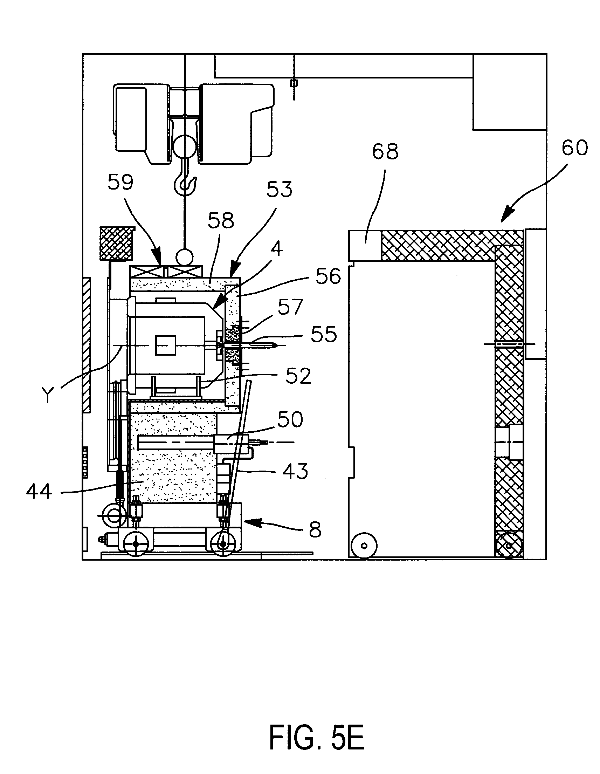

L'enveloppe 53 est ensuite mise en place autour du château de transport 4, également au moyen de la grue (figure 5E).

Le chariot 8 peut éventuellement être déplacé en direction de la cellule 2 avant la mise en place de l'enveloppe 53.

Les blocs de détecteurs 59 sont montés sur l'enveloppe 53 et le module d'émission 50 est placé dans son logement 48 dans le support 44.

De manière similaire, le fond 56 de l'enveloppe 53 comporte une ouverture pour le ringard 30, on prévoit, après montage d'une rallonge de ringard, d'obturer l'ouverture avec un bouchon.

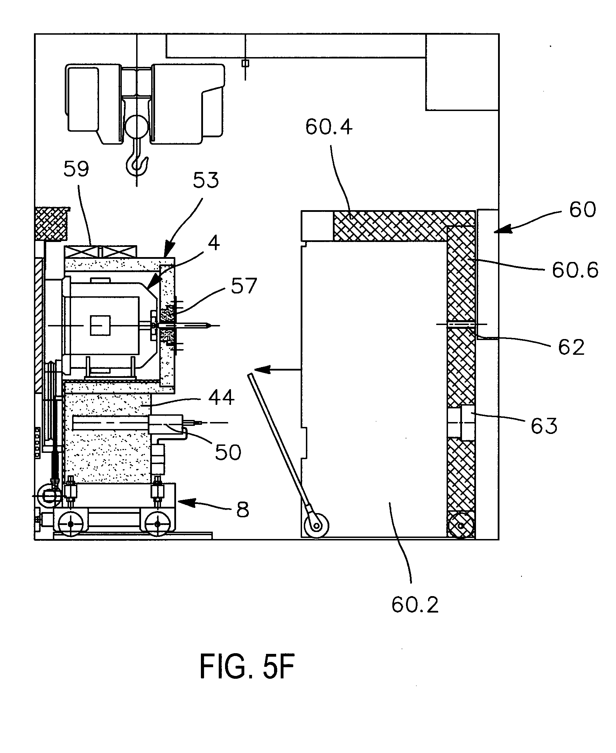

Lors d'une étape suivante, l'ensemble ainsi formé est complètement avancé contre la cellule blindée 2 jusqu'à sa position de fonctionnement de sorte que le château de transport 4 soit en face de l'accès 14 de la cellule. Le déplacement du chariot 8 est effectué à l'aide de la clé à cliquet 43. La position du chariot 8 est ensuite verrouillée en butée contre la cellule blindée 2 (figure 5F).

Sur la figure 5G, on peut voir la protection radiologique 60 en place en butée contre la cellule blindée 2, la protection 60 a été déplacée au moyen de la clé à cliquet 61. La protection 60 est ensuite fixée sur la paroi de la cellule 2, par exemple au moyen de broches.

Lorsque la protection 60 est en place, les câbles d'alimentation du module d'émission traversent l'ouverture dans le fond de la protection 60, l'ouverture est obturée autour des câbles au moyen d'un bouchon.

En outre, la rallonge du ringard traverse le fond de la protection 60, le ringard 30 est ensuite connecté à cette rallonge.

Le dispositif de mesure est prêt à fonctionner, nous allons maintenant décrire les différentes étapes de fonctionnement du dispositif selon la présente invention.

Le transfert du récipient de transfert 24 est réalisé de la manière suivante :

Le ringard 30 est connecté au château de transport 4, plus particulièrement au fond du réceptacle 28.

La clavette complémentaire est montée pour ouvrir le château de transport 4, en faisant coulisser la porte 22.

La porte à barillet 16 de la cellule blindée 2 est pivotée de sorte à laisser le passage libre.

Le récipient de transfert 24 est ensuite introduit dans la cellule blindée 2.

Le bouchon du récipient de transfert 24 est retiré, et la matière nucléaire est déposée dans le récipient de transfert 24.

Ensuite, en effectuant les opérations précédentes dans l'ordre inverse, le récipient de transfert 24 est ramené dans le château de transport 4.

On fait pivoter la porte à barillet 16 et on ferme la porte du château 4 en abaissant la clavette complémentaire.

La mesure a alors lieu.

On peut n'utiliser que les blocs de mesure 59 sont utilisés dans le cas d'une mesure de type passif, ou on peut utiliser préalablement le module d'émission neutronique avant d'effectuer les mesures pour interroger la matière nucléaire dans le cas d'une mesure de type actif. Dans ce dernier cas, des cycles « émission-mesure » sont répétés à une fréquence de l'ordre de quelques dizaines de hertz, l'émission étant du type neutronique ou électromagnétique.

Ce type de mesures fait partie des connaissances générales de l'homme du métier, et est notamment décrit dans le document « Active nondestructive assay of nuclear materials NUREG/CR-0602 SAI-MLM-2585 january 1981 » et dans « mesure nucléaire non destructive dans le cycle du combustible ». Partie 2 BN 3 406 des « Techniques de l'ingénieur ».

A la fin de la mesure, le dispositif de mesure est démonté en suivant les étapes de montage dans l'ordre inverse.

Après la mesure, la matière nucléaire peut être évacuée par le château de transport vers une autre zone.

Le dispositif selon la présente invention est modulaire, son montage et son démontage sont très aisés et peuvent être réalisés sans outil par du personnel sans qualification particulière, autre que la manutention. Il permet par ailleurs d'être très facilement transporté sous forme de pièces détachées, sur différents sites de stockage pour effectuer des mesures de contrôle, par exemple par un organisme international de surveillance des matières nucléaires. Il peut être partagé entre plusieurs cellules blindées d'un même site, et évite donc d'avoir à s'équiper d'un dispositif de mesure par cellule.

## Revendications

1. Dispositif mobile de mesure de grandeurs physiques de matière nucléaire contenue dans une cellule blindée (2), apte à être accosté sur et à être désaccosté de ladite cellule blindée (2), ledit dispositif étant destiné à effectuer la mesure dans la position accostée sur une cellule blindée (2), comportant un chariot (8), un support (44) disposé sur le chariot (8), un récipient blindé (4) contenant un récipient de transfert (24) destiné à stocker de la matière nucléaire à mesurer, ledit récipient blindé (4) étant disposé sur le support (44), le récipient blindé (4) comportant une ouverture destinée à être alignée avec une ouverture (14) présente dans une paroi de la cellule blindée (2) donnant accès à la matière nucléaire qu'elle contient, **caracterisé en ce que** ledit dispositif de mesure comporte également une enveloppe (53) recouvrant le récipient blindé (4) et des moyens de mesure (59) étant fixés sur l'enveloppe.

2. Dispositif de mesure selon la revendication 1, dans lequel le chariot (8), le support (44) et le récipient blindé (4) sont aptes à être séparés pour permettre un démontage et un montage aisés dudit dispositif en vue de son transport vers une autre cellule blindée et son utilisation avec ladite autre cellule blindée.

3. Dispositif de mesure selon la revendication 1 ou 2, dans lequel le support (44) comporte un logement (48) recevant un module d'émission neutronique (50) ou de rayonnements électromagnétiques.

4. Dispositif selon l'une des revendications 1 à 3, dans lequel l'enveloppe (53) et le support (44) forment un caisson entourant sur cinq côtés le récipient blindé (4), le sixième côté étant ouvert et permettant la communication avec la cellule blindée (2).

5. Dispositif selon l'une des revendications 1 à 4, dans lequel l'enveloppe (53) comporte deux parois latérales (54), un fond (56) destiné à être disposé à l'opposé de la cellule blindée (2) par rapport au récipient blindé (4) et un toit (58), ledit fond (56) comportant une ouverture pour permettre la connexion du récipient blindé (4) à un ringard (30).

6. Dispositif de mesure selon la revendication précédente, dans lequel deux moyens de mesure (59) sont fixés sur chaque paroi latérale (54) à l'extérieur de l'enveloppe (53) et deux moyens de mesure (59) sur le toit (58) à l'extérieur de l'enveloppe (53).

7. Dispositif de mesure selon la revendication précédente, dans lequel les moyens de mesure (59) présentent chacun un axe, les deux moyens de mesure (53) par paroi (54, 58) de l'enceinte ayant leurs axes parallèles, et les moyens de mesure de deux parois différentes ayant leurs axes orthogonaux.

8. Dispositif de mesure selon la revendication 6 ou 7, dans lequel les paires de moyens de mesure (59) sont centrées sur la cible du module d'émission (50).

9. Dispositif de mesure selon l'une des revendications 1 à 8, dans lequel les moyens de mesure (59) comportent plusieurs détecteurs, par exemple quatre ou sept.

10. Dispositif selon l'une des revendications 1 à 9, dans lequel l'enveloppe (53) et/ou le support (44) sont en graphite.

11. Dispositif selon la revendication 9, dans lequel le graphite est du graphite purifié du type UCAR, portant la référence CS 49 H.

12. Dispositif selon la revendication 10 ou 11, dans lequel le graphite est recouvert d'une tôle en aluminium anodisé.

13. Dispositif de mesure selon l'une des revendications 1 à 12, comportant une protection radiologique (60) recouvrant l'ensemble formé par le chariot (8), le récipient blindé (4) et l'enveloppe en graphite (53) de sorte à isoler ledit ensemble de l'environnement extérieur.

14. Dispositif selon la revendication 13 en combinaison avec la revendication 3, dans lequel la protection radiologique (60) comporte deux parois latérales (60.2), un fond (60.6) et un toit (60.4), une première ouverture(63) étant pratiquée dans le fond (60.6) de la protection (60) pour le passage des câbles (51) d'alimentation et de contrôle du module d'émission (50) et des moyens de mesure (59), ladite première ouverture (63) étant obturée par un bouchon, et une deuxième ouverture (62) pour la connexion du ringard (30), ladite deuxième ouverture (62) étant obturée par un bouchon.

15. Dispositif de mesure selon la revendication 13 ou 14, comportant des moyens de guidage de la protection radiologique (60) par rapport à l'ensemble lors de la mise en place de la protection (60) autour de l'ensemble.

16. Procédé d'assemblage du dispositif de mesure selon l'une des revendications précédentes, comportant les étapes :
- mise en place du chariot (8),
- mise en place du support (44) sur le chariot (8),
- mise en place du récipient blindé (4) sur le support (44), **caracterisé en ce que** le procédé comporte les étapes suivantes :
- mise en place de l'enveloppe (53),
- mise en place des moyens des mesures (59) sur l'enveloppe.

17. Procédé d'assemblage selon la revendication précédente du dispositif de la revendication 3, comportant l'étape de mise en place du module d'émission (50) dans le support (44).

18. Procédé d'assemblage selon la revendication 16 ou 17, comportant l'étape ultérieure de mise en place de la protection biologique (60).

19. Procédé de mesure mettant en oeuvre le dispositif selon l'une des revendications 1 à 15, comportant les étapes :
- ouverture du récipient blindé (4),
- ouverture de la porte d'accès (16) à l'intérieur de la cellule blindée (2),
- accostage du récipient de transfert (24) à la cellule blindée (2),
- retrait du bouchon du récipient de transfert (24),
- mise en place de la matière nucléaire dans le récipient transfert (24),
- remise en place du bouchon sur le récipient de transfert (24),
- remise en place du récipient de transfert (24) dans le récipient blindé (4),
- fermeture de la porte d'accès (16) à l'intérieur de la cellule blindée,
- fermeture du récipient blindé (4),
- mesure des grandeurs physiques de la matière nucléaire.

20. Procédé de mesure selon la revendication précédente mettant en oeuvre le dispositif de mesure selon la revendication 3, comportant des cycles « émission-mesure » répétés à une fréquence de l'ordre de quelques dizaines de hertz.

## Claims

1. Movable device for measuring physical quantities of nuclear material contained in a shielded cell (2), which device can be brought up against said shielded cell (2) and can be retracted therefrom, said device being intended to carry out the measurement in the position in which it is against the shielded cell (2), the device comprising a carriage (8), a support (44) placed on the carriage (8) and a shielded container (4) containing a transfer container (24) intended to store the nuclear material to be measured, said shielded container (4) being placed on the support (44), the shielded container (4) comprising an opening intended to be aligned with an opening (14) in one wall of the shielded cell (2) giving access to the nuclear material that it contains, **characterized in that** said measuring device also comprises a casing (53) covering the shielded container (4) and measurement means (59) being fastened to the casing.

2. Measuring device according to claim 1, in which the carriage (8), the support (44) and the shielded container (4) are capable of being separated to enable an easy dismantling and an assembly of said device to allow its transport to another shielded cell and its use with said other shielded cell.

3. Measuring device according to claim 1 or 2, in which the support (44) comprises a housing (48) accommodating a neutron emission or electromagnetic radiation module (50).

4. Device according to one of claims 1 to 3, in which the casing (53) and the support (44) form a caisson surrounding on five sides the shielded container (4), the sixth side being open and enabling communication with the shielded cell (2).

5. Device according to one of claims 1 to 4, in which the casing (53) comprises two side walls (54), a bottom (56) intended to be placed opposite the shielded cell (2) in relation to the shielded container (4) and a roof (58), said bottom (56) comprising an opening to enable the connection of the shielded container (4) to a poker (30).

6. Measuring device according to the preceding claim, in which two measurement means (59) are fastened to each lateral wall (54) on the outside of the casing (53) and two measurement means (59) on the roof (58) on the outside of the casing (53).

7. Measuring device according to the preceding claim, in which the measurement means (59) each have an axis, the two measurement means (53) per wall (54, 58) of the enclosure having their axes parallel, and the measurement means of two different walls having their axes orthogonal.

8. Measuring device according to claim 6 or 7, in which the pairs of measurement means (59) are centred on the target of the emission module (50).

9. Measuring device according to one of claims 1 to 8, in which the measurement means (59) comprise several detectors, for example four or seven.

10. Device according to one of claims 1 to 9, in which the casing (53) and/or the support (44) are made of graphite.

11. Device according to claim 9, in which the graphite is UCAR type purified graphite, with the reference CS 49 H.

12. Device according to claim 10 or 11, in which the graphite is covered with an anodized aluminium sheet.

13. Measuring device according to one of claims 1 to 12, comprising a radiological protection (60) covering the assembly formed by the carriage (8), the shielded container (4) and the graphite casing (53) so as to insulate said assembly from the exterior environment.

14. Device according to claim 13 in combination with claim 3, in which the radiological protection (60) comprises two side walls (60.2), a bottom (60.6) and a roof (60.4), a first opening (63) being formed in the bottom (60.6) of the protection (60) for the passage of cables (51) for supplying and controlling the emission module (50) and measurement means (59), said first opening (63) being blanked off by a plug, and a second opening (62) for the connection of the poker (30), said second opening (62) being blanked off by a plug.

15. Measuring device according to claim 13 or 14, comprising means of guiding the radiological protection (60) in relation to the assembly while the protection (60) is being put in place around the assembly.

16. Method of assembling the measuring device according to one of the preceding claims, comprising the steps:
- putting in place the carriage (8),
- putting in place the support (44) on the carriage (8),
- putting in place the shielded container (4) on the support (44), **characterized in that** the process comprises the following steps.
- putting in place the casing (53),
- putting in place measurement means (59) on the casing.

17. Method of assembling according to the preceding claim of the device of claim 3, comprising the step of putting in place the emission module (50) in the support (44).

18. Measurement method according to claim 16 or 17, comprising the later step of putting in place the biological protection (60).

19. Measurement method employing the device according to one of claims 1 to 15, comprising the steps:
- opening the shielded container (4),
- opening the access door (16) inside the shielded cell (2),
- bringing the transfer container (24) up against the shielded cell (2),
- withdrawing the plug from the transfer container (24),
- putting in place the nuclear material in the transfer container (24),
- replacing the plug on the transfer container (24),
- replacing the transfer container (24) in the shielded container (4),
- closing the access door (16) inside the shielded cell,
- closing the shielded container (4),
- measuring the physical quantities of the nuclear material.

20. Measurement method according to the preceding claim employing the measuring device according to claim 3, comprising "emission-measurement" cycles repeated at a frequency of the order of several tens of hertz.

## Patentansprüche

1. Mobile Vorrichtung zum Messen physikalischer Größen von nuklearem Material, das in einer geschirmten Zelle (2) enthalten ist, wobei sie geeignet ist, an die geschirmten Zelle (2) angedockt und von dieser abgedockt zu werden, wobei die Vorrichtung dazu bestimmt ist, die Messung in der an die geschirmten Zelle (2) angedockten Position durchzuführen, aufweisend einen Schlitten (8), einen Träger (44), der auf dem Schlitten (8) angeordnet ist, einen geschirmten Behälter (4), der einen Transferbehälter (24) enthält, welcher dazu bestimmt ist, zu messendes nukleares Material aufzubewahren, wobei der geschirmte Behälter (4) auf dem Träger (44) angeordnet ist, wobei der geschirmten Behälter (4) eine Öffnung aufweist, die dazu bestimmt ist, fluchtend mit einer Öffnung (14) angeordnet zu werden, die in einer Wand der gescHirmten Zelle (2) vorhanden ist, welche Zugang zu dem nuklearen Material gibt, das diese enthält, **dadurch gekennzeichnet, dass** die Vorrichtung zum Messen auch eine Umhüllung (53) aufweist, die den geschirmten Behälter (4) umhüllt, und Messeinrichtungen (59) an der Umhüllung befestigt sind.

2. Vorrichtung zum Messen nach Anspruch 1, bei welcher der Schlitten (8), der Träger (44) und der geschirmte Behälter (4) geeignet sind, getrennt zu werden, um ein unschwieriges Demontieren und Montieren der Vorrichtung zu ermöglichen, und zwar im Hinblick auf deren Transport zu einer anderen geschirmten Zelle und deren Verwendung mit dieser anderen geschirmten Zelle.

3. Vorrichtung zum Messen nach Anspruch 1 oder 2, bei welcher der Träger (44) eine Aufnahme (48) aufweist, die ein Neutronenemissionsmodul (50) oder ein Modul zum Aussenden elektromagnetischer Strahlung aufnimmt.

4. Vorrichtung nach einem der Ansprüche 1 bis 3, bei welcher die Umhüllung (53) und der Träger (44) einen Kasten bilden, der auf fünf Seiten den geschirmten Behälter (4) umgibt, wobei die sechste Seite offen ist und das Kommunizieren mit der geschirmten Zelle (2) ermöglicht.

5. Vorrichtung nach einem der Ansprüche 1 bis 4, bei welcher die Umhüllung (53) zwei Seitenwände (54), einen Boden (56), der dazu bestimmt ist, gegenüberliegend der geschirmten Zelle (2) bezüglich des geschirmten Behälters (4) angeordnet zu sein, und eine Decke (58) aufweist, wobei der Boden (56) eine Öffnung aufweist, um das Verbinden des geschirmten Behälters (4) mit einem Stochereisen (30) zu ermöglichen.

6. Vorrichtung zum Messen nach dem vorhergehenden Anspruch, bei welcher zwei Einrichtungen zum Messen (59) an jeder Seitenwand (54) außerhalb der Umhüllung (53) und zwei Einrichtungen zum Messen (59) auf der Decke (58) außerhalb der Umhüllung (53) befestigt sind.

7. Vorrichtung zum Messen nach dem vorhergehenden Anspruch, bei welcher die Einrichtungen zum Messen (59) jeweils eine Achse aufweisen, wobei die zwei Einrichtungen zum Messen (53), je Wand (54, 58) der Umhüllung, parallele Achsen haben, und die Einrichtungen zum Messen zweier verschiedener Wände zueinander senkrechte Achsen haben.

8. Vorrichtung zum Messen nach Anspruch 6 oder 7, bei welcher die Paare von Einrichtungen zum Messen (59) auf das Ziel des Emissionsmoduls (50) zentriert sind.

9. Vorrichtung zum Messen nach einem der Ansprüche 1 bis 8, bei welcher die Einrichtungen zum Messen (59) mehrere Detektoren aufweisen, beispielsweise vier oder sieben.

10. Vorrichtung nach einem der Ansprüche 1 bis 9, bei welcher die Umhüllung (53) und/oder der Träger (44) aus Graphit bestehen.

11. Vorrichtung nach Anspruch 9, bei welcher das Graphit gereinigtes Graphit vom Typ UCAR ist, das die Bezugsbezeichnung CS 49 H trägt.

12. Vorrichtung nach Anspruch 10 oder 11, bei welcher das Graphit mit einem aus anodisiertem Aluminium bestehenden Blech überzogen ist.

13. Vorrichtung zum Messen nach einem der Ansprüche 1 bis 12, die einen radiologischen Schutz (60) aufweist, der die Einheit umhüllt, die durch den Schlitten (8), den geschirmten Behälter (4) und die Graphitumhüllung (53) gebildet ist, derart, dass die Einheit von der äußeren Umgebung isoliert ist.

14. Vorrichtung nach Anspruch 13 in Kombination mit Anspruch 3, bei welcher der radiologische Schutz (60) zwei Seitenwände (60.2), einen Boden (60.6) und ein Dach (60.4) aufweist, wobei eine erste Öffnung (63) in dem Boden (60.6) des Schutzes (60) für die Durchführung von Versorgungs- und Steuerkabel (51) des Emissionsmoduls (50) und der Messeinrichtung (59) vorgesehen ist, wobei die erste Öffnung (63) durch einen Stopfen verschlossen ist, sowie eine zweite Öffnung (62) zum Anschließen des Stochereisens (30), wobei die zweite Öffnung (62) durch einen Stopfen verschlossen ist.

15. Vorrichtung zum Messen nach Anspruch 13 oder 14, die Einrichtungen zur Führung des radiologischen Schutzes (60) bezüglich der Gesamteinheit während des Installierens des Schutzes (60) um die Gesamteinheit herum aufweist.

16. Verfahren zum Zusammenbauen einer Vorrichtung zum Messen nach einem der vorhergehenden Ansprüche, das die Schritte umfasst:
- Installieren des Schlittens (8),
- Installieren des Trägers (44) auf dem Schlitten (8),
- Installieren des geschirmten Behälters (4) auf dem Träger (44), **dadurch gekennzeichnet, dass** das Verfahren die folgenden Schritte umfasst:
- Installieren der Umhüllung (53),
- Installieren der Einrichtungen zum Messen (59) an der Umfüllung.

17. Verfahren zum Zusammenbauen nach dem vorhergehenden Anspruch der Vorrichtung von Anspruch 3, welches den Schritt eines Installierens des Emissionsmoduls (50) im Träger (44) aufweist.

18. Verfahren zum Zusammenbauen nach Anspruch 16 oder 17, das den späteren Schritt eines Installierens des biologischen Schutzes (60) umfasst.

19. Verfahren zum Messen, bei dem die Vorrichtung nach einem der Ansprüche 1 bis 15 eingesetzt wird und das die Schritte umfasst:
- Öffnen des geschirmten Behälters (4),
- Öffnen der Zugangstür (16) in Inneren der geschirmten Zelle (2),
- Andocken des Transfer-Behälters (24) an die geschirmte Zelle (2),
- Zurückziehen des Stopfens des Transferbehälters (24),
- Einsetzen des nuklearen Materials in den Transferhehälter (24),
- Wiedereinsetzen des Stopfens am Transferbehälter (24),
- Wiedereinsetzen des Transferbehälters (24) in den geschirmten Behälter (4),
- Schließen der Zugangstür (16) im Inneren der geschirmten Zelle,
- Schließen des geschirmten Behälters (4),
- Messen der physikalischen Größen des nuklearen Materials.

20. Verfahren zum Messen nach dem vorhergehenden Anspruch, bei dem die Vorrichtung zum Messen nach Anspruch 3 eingesetzt wird, umfassend "Emission - Messung" -Zyklen, die mit einer Frequenz in der Größenordnung von einigen Dutzend Hertz wiederholt werden.
